# EUROPEAN PATENT SPECIFICATION

(11) **EP 1 662 107 B1**
(45) Date of publication and mention of the grant of the patent: **18.04.2007**
(21) Application number: 05025565.2
(22) Date of filing: 23.11.2005
(51) Int. Cl.: F01N 3/20, B01D 53/94

(54) **Exhaust gas purifying system of internal combustion engine**
Abgasreinigungssystem für eine Brennkraftmaschine
Système de purification de gaz d'échappement d'un moteur à combustion interne

(30) Priority: 26.11.2004 JP 2004342389
(43) Date of publication of application: 31.05.2006
(73) Proprietor: TOYOTA JIDOSHA KABUSHIKI KAISHA, Toyota-shi, Aichi-ken 471-8571 (JP)
(72) Inventor: Oba, Takahiro Toyota Jidosha Kabushiki Kaisha, Toyota-shi Aichi-ken, 471-8571 (JP)
(74) Representative: TBK-Patent

(56) References cited:
- DE-A1- 3 408 057
- DE-A1- 10 001 992
- DE-A1- 10 045 548
- DE-A1- 19 838 032
- PATENT ABSTRACTS OF JAPAN vol. 2002, no. 05, 3 May 2002 (2002-05-03) & JP 2002 021534 A (BOSCH BRAKING SYSTEMS CO LTD), 23 January 2002 (2002-01-23)
- PATENT ABSTRACTS OF JAPAN vol. 2003, no. 08, 6 August 2003 (2003-08-06) & JP 2003 106138 A (YAMAICHI KINZOKU KK; YAMAICHI NEW TECHNOLOGY:KK), 9 April 2003 (2003-04-09)
- PATENT ABSTRACTS OF JAPAN vol. 2003, no. 12, 5 December 2003 (2003-12-05) & JP 2004 285907 A (HINO MOTORS LTD), 14 October 2004 (2004-10-14)
- PATENT ABSTRACTS OF JAPAN vol. 016, no. 299 (M-1274), 2 July 1992 (1992-07-02) & JP 04 081513 A (NISSAN DIESEL MOTOR CO LTD), 16 March 1992 (1992-03-16)

## Description

### (BACKGROUND OF THE INVENTION)

### (Field of the Invention)

The present invention rotates to an exhaust gas purifying system of an internal combustion engine that has an NOx storage reduction catalyst provided in an exhaust passage of the internal combustion engine.

### (Description of the Related Art)

There is a type of an exhaust gas purifying system for an internal combustion engine that has what is called an NOx storage reduction catalyst provided in an exhaust passage of the internal combustion engine. When in the oxidizing atmosphere, the NOx storage reduction catalyst (which will be simply referred to as NOx catalyst hereinafter) captures NOx contained in the exhaust gas to keep it, and when in the reducing atmosphere, it reduces (or deoxidizes) the NOx it keeps.

According to a known technology, when oxides such as NOx and SOx kept in the NOx catalyst are to be reduced in such an exhaust gas purifying system of an internal combustion engine, reducing agent is supplied to the NOx catalyst to render the ambient of the NOx agent a reducing atmosphere.

Japanese Patent Application Laid-Open No. 11-294145 discloses a technology for such an exhaust gas purifying system of an internal combustion engine, in which an exhaust throttle valve is provided in the exhaust passage upstream of the NOx catalyst, and when reducing agent is supplied to the NOx catalyst, the exhaust throttle valve is brought to a closed state and the main fuel injection amount of the internal combustion engine is increased.

Japanese Patent Application Laid-Open NO. 2002-309987 discloses a technology in which when reducing agent is supplied to an NOx catalyst, an exhaust throttle valve is brought to a closed state to increase the EGR gas amount thereby rendering the air-fuel ratio of the exhaust gas rich. Japanese Patent Application Laid-Open No. 10-54270 also discloses a technology directed to an exhaust gas purifying system of an internal combustion engine.

In the exhaust gas purifying system of an internal combustion engine that has an NOx catalyst provided in an exhaust passage of the internal combustion engine, when the oxide kept in the NOx catalyst is to be reduced, a reducing ambient atmosphere is provided for the NOx catalyst. Specifically, it is necessary to raise the temperature of the NOx catalyst to a certain temperature or higher and to decrease the air-fuel ratio of the ambient atmosphere of the NOx catalyst to a certain ratio or lower.

In the case where an exhaust throttle valve is provided in the exhaust passage downstream of the catalyst, when the temperature of the NOx catalyst is to be raised, exhaust throttling is sometimes effected by controlling to operate the exhaust throttle in the closing direction. This is effective since when exhaust throttling is effected, the engine load of the internal combustion engine increases to cause a rise in the temperature of the exhaust gas discharged from the internal combustion engine or the temperature of the exhaust gas flowing into the NOx catalyst, whereby the temperature of the NOx catalyst can be raised more expeditiously

On the other hand, when the air-fuel ratio of the ambient atmosphere of the NOx catalyst is reduced, reducing agent is supplied to the NOx catalyst from the upstream side thereof. However, in the case where reducing agent is supplied to the NOx catalyst from the upstream side thereof, if exhaust throttling is effected by the aforementioned exhaust throttle valve, the air-fuel ratio of the ambient atmosphere of the NOx catalyst is hard to be decreased to air-fuel ratios that allow reduction (or deoxidation) of the oxide kept in the NOx catalyst. This is because when exhaust throttling is effected using the aforementioned exhaust throttle valve, the speed of flow of the exhaust gas in the upstream of the exhaust throttle valve decreases and the reducing agent supplied on the upstream side of the NOx catalyst is easy to diffuse. When the reducing agent supplied on the upstream side of the NOx catalyst diffuses, it becomes hard to concentrate the supply of the reducing agent to the NOx agent, and it becomes difficult to reduce the air-fuel ratio of the ambient atmosphere of the NOx catalyst.

### (SUMMARY OF THE INVENTION)

The present invention has been made in view of the above-described problem and has as an object to provide a technology that enables, in an exhaust gas purifying system in an internal combustion engine having an NOx catalyst provided in an exhaust passage of the internal combustion engine, to reduce (or deoxidize) oxide kept in the NOx catalyst efficiently.

According to the present invention, in the case where the oxide kept in the NOx catalyst provided in the exhaust passage of the internal combustion engine is to be reduced, when the temperature of the NOx catalyst is to be raised, an exhaust throttle valve provided downstream of the NOx catalyst is brought to a closed state, and when the air-fuel ratio of the ambient atmosphere of the NOx catalyst is to be decreased, the exhaust throttle valve is brought to an open state and a reducing agent is supplied to the NOx catalyst from its upstream side.

More specifically, an exhaust gas purifying system of an internal combustion engine according to the present invention is characterized by:
an NOx storage reduction catalyst provided in an exhaust passage of the internal combustion engine;
reducing agent supply means provided upstream of the NOx storage reduction catalyst for supplying a reducing agent to the NOx storage reduction catalyst;
catalyst temperature detection means for detecting the temperature of said NOx storage reduction catalyst;
an exhaust throttle valve provided in said exhaust passage downstream of said NOx storage reduction catalyst; and
oxide reduction means for reducing oxide kept in said NOx storage reduction catalyst by raising the temperature of said NOx storage reduction catalyst to a specific temperature or higher and decreasing the air-fuel ratio of ambient atmosphere of said NOx storage reduction catalyst to a specific air-fuel ratio or lower, when a specific condition is met,
wherein in reducing the oxide kept in said NOx storage reduction catalyst, when the temperature of said NOx storage reduction catalyst detected by said catalyst temperature detection means is lower than said specific temperature, said oxide reduction means brings said exhaust throttle valve to a closed state, and when the temperature of said NOx storage reduction catalyst detected by said catalyst temperature detection means is equal to or higher than said specific temperature, said oxide reduction means brings said exhaust throttle valve to an open state and supplies reducing agent from said reducing agent supply means to decrease the air-fuel ratio of the ambient atmosphere of said NOx storage reduction catalyst to said specific air-fuel ratio of lower.

Here, the specific condition is a condition that has been determined in advance in accordance with the type of the oxide to be reduced. The specific condition is, for example, that the amount of the oxide to be reduced kept in the NOx catalyst becomes equal to or larger than a specific amount.

The specific temperature and the specific air-fuel ratio are such that if the air-fuel ratio of the ambient atmosphere of the NOx catalyst is equal to or lower than the specific air-fuel ratio and the temperature of the NOx catalyst is equal to or higher than the specific temperature, the oxide kept in the NOx catalyst will be reduced. The specific temperature and the specific air-fuel ratio are values that have been determined in advance in accordance with the type of the oxide to be reduced.

According to the present invention, when the oxide kept in the NOx catalyst is to be reduced (or deoxidized), the oxide reduction means raises the temperature of the NOx catalyst to the specific temperature or higher, and decreases the air-fuel ratio of the ambient atmosphere of the NOx catalyst to the specific air-fuel ratio or lower.

When the specific condition is met, if the-temperature of the NOx catalyst is lower than the specific temperature, or if the temperature of the NOx catalyst is to be raised, the oxide means brings the exhaust throttle valve to a closed state. Here, bringing exhaust throttle valve to a closed state means operating the exhaust throttle valve to the closing direction to bring it into a state in which the flow rate of the gas is reduced. By bringing the exhaust throttle valve to a closed state to decrease the flow rate of the exhaust gas, it is possible to raise the temperature of the exhaust gas flowing into the NOx catalyst. Thus, it is possible to promote temperature rise of the NOx catalyst more effectively.

As per the above, in raising the temperature of the NOx catalyst to the specific temperature or higher, it is possible to raise the temperature of the NOx catalyst more rapidly.

When the temperature the NOx catalyst becomes equal to or higher than the specific temperature, the oxide reduction means brings the exhaust throttle valve to an open state supplies reducing agent through the reducing agent supply means to decrease the air-fuel ratio of the ambient atmosphere of the NOx catalyst to the specific air-fuel ratio or lower. Here, bringing the exhaust throttle valve to an state means making the degree of opening of the exhaust throttle valve larger than that in the state in which the exhaust throttle valve is brought to a state. The open state may includes the fully opened state.

When the exhaust throttle valve is in an open state, the speed of flow of the exhaust gas on the upstream side of the exhaust throttle valve becomes higher than that in the case where the exhaust throttle valve is in a closed state. Therefore, if the exhaust throttle valve is brought to an open state when reducing agent is supplied to the NOx catalyst from its upstream side, the reducing agent is likely to reach the NOx without diffusing. Therefore, it is possible to supply the reducing agent to the NOx catalyst in a more concentrated way, and it is possible to decrease the air-fuel ratio of the ambient atmosphere of the NOx catalyst easily.

As per the above, in reducing the air-fuel ratio of the ambient atmosphere of the NOx catalyst to the specific air-fuel ratio or lower, it is possible to reduce the air-fuel ratio of the ambient atmosphere of the NOx catalyst more rapidly.

Therefore, according to the present invention, when the oxide kept in the NOx catalyst is to be reduced (or deoxidized), it is possible to raise the temperature of the NOx catalyst more rapidly and to decrease the air-fuel ratio of the ambient atmosphere of the NOx catalyst more quickly. Therefore, it is possible to reduce the oxide kept by the NOx catalyst more efficiently.

In the case where the temperature of the NOx catalyst is to be raised also, the exhaust throttle valve may be brought to a closed state and reducing agent may be supplied to the NOx catalyst by the reduction agent supply means. When reducing agent is supplied to the NOx catalyst, the reducing agent is oxidized by the NOx catalyst, and the temperature of the NOx catalyst can be raised by oxidation heat generated thereby. If the exhaust throttle valve is in a closed state in this case, the in the exhaust passage on the upstream side of the exhaust throttle valve increases, and thereby oxidation of the reducing agent by the NOx catalyst will be promoted more efficiently. Thus, temperature rise of the NOx catalyst will be promoted more efficiently.

The system of the present invention may further include load placed by auxiliary machine control means for controlling a load placed by an auxiliary machine that is driven by the internal combustion engine. In this case, when the oxide kept by the NOx storage reduction catalyst is to be reduced by said oxide reduction means, if said exhaust throttle valve has been brought to an open state, the load placed by auxiliary machine control means may increase the load placed by the auxiliary machine to make it higher than that in the case where the exhaust throttle valve has been brought to a closed state.

When the exhaust throttle valve is in an open state, the engine load of the internal combustion engine becomes lower than that in the case where the exhaust throttle valve is in a closed state, and therefore the temperature of the exhaust gas discharged from the internal combustion engine sometimes becomes lower. A decrease in the exhaust gas temperature can lead to a decrease in the temperature of the NOx catalyst.

In view of this, when the exhaust throttle valve is in an open state, the load placed by the auxiliary machine is increased as compared to that in the case where the exhaust throttle valve is in a closed state. By increasing the load placed by the auxiliary machine, it is possible to increase the engine load of the internal combustion engine. In other words, it is possible to compensate a decrease in the engine load of the internal combustion engine caused by bringing the exhaust throttle valve to an open state by increasing the load placed by the auxiliary machine. Consequently, it is possible to suppress lowering of the temperature of the exhaust gas discharged from the internal combustion engine, to thereby suppress lowering of the temperature of the NOx catalyst.

In the present invention, a second exhaust throttle valve may be provided in the exhaust passage downstream of the reducing agent supply means and upstream of the NOx storage reduction catalyst, in addition to the exhaust throttle valve as a first exhaust throttle valve provided in the exhaust passage downstream of the NOx catalyst. In this case, in reducing the oxide kept in said NOx storage reduction catalyst, when the temperature of the NOx storage reduction catalyst is lower than the specific temperature, namely when the temperature of the NOx catalyst is to be raised, the oxide reduction means may bring the first exhaust throttle valve to a closed state and bring the second exhaust throttle valve to an open state. On the other hand, when the temperature of the NOx storage reduction catalyst is equal to or higher than the specific temperature, namely when the air-fuel ratio of the ambient atmosphere of the NOx catalyst is to be decreased by supplying reducing agent through the reducing agent supply means, the oxide reduction means may bring the first exhaust throttle valve to an open state and brings the second exhaust throttle valve to a closed state.

In the above described configuration, when the first exhaust throttle valve is in a closed state and the second exhaust throttle valve is in an open state, it is possible to raise the temperature of the exhaust gas flowing into the NOx catalyst in a similar manner as in the case where there is only the first exhaust throttle valve and the first exhaust throttle valve is in a closed state. Therefore, according to this control, when the temperature of the NOx catalyst is to be raised to the specific temperature or higher, it is possible to raise the temperature of the NOx catalyst more rapidly.

On the other hand, when the first exhaust throttle valve is in an open state and the second exhaust throttle valve is in a closed state, the flow rate of the exhaust gas is decreased at the position of the second exhaust throttle valve. Consequently, a pressure difference between the upstream side and the downstream side of the second exhaust throttle valve is created. Therefore, the speed of flow of the exhaust gas on the downstream side of the second exhaust throttle valve becomes higher than that in the case where both the first exhaust throttle valve and the second exhaust throttle valve are in open states.

Therefore, when reducing agent is supplied by the reducing agent supply means in the state where the first exhaust throttle valve is in an open state and the second exhaust throttle valve is in a closed state, reducing agent becomes hard to diffuse on the downstream side of the second exhaust throttle valve. As a result, reducing agent can be supplied to the NOx catalyst disposed downstream of the second exhaust throttle valve in a more concentrated manner. Therefore, according to this control, in decreasing the air-fuel ratio of the ambient atmosphere of the NOx catalyst to the specific air-fuel ratio or lower, it is possible to decrease the air-fuel ratio of the NOx ambient atmosphere of the NOx catalyst more rapidly.

The above and other objects, features and advantages of the present invention will become more readily apparent to those skilled in the art from the following detailed description of preferred embodiments of the present invention taken in conjunction with the accompanying drawings.

### (BRIEF DESCRIPTION OF THE DRAWINGS)

Fig. 1 is a diagram schematically showing the basic structure of the internal combustion engine according to a first embodiment and its air-intake and exhaust systems.
Fig, 2 is a time chart showing changes in the exhaust gas air-fuel ratio when exhaust fuel addition is effected through a fuel addition valve.
Fig. 3 is a flow chart of a control routine of NOx reduction control according to the first embodiment of the present invention.
Fig. 4 is a diagram schematically showing the basic structure of the internal combustion engine according to a second embodiment and its air-intake and exhaust systems.
Fig. 5 is a flow chart of a control routine of NOx reduction control according to the second embodiment of the present invention.

### (DESCRIPTION OF THE EMBODIMENT)

In the following, embodiments of a catalyst temperature raising system of an internal combustion engine according to the present invention will be described with reference to the drawings.

### (First Embodiment)

### (Basic Structure of Internal Combustion Engine and its Air-Intake and Exhaust Systems)

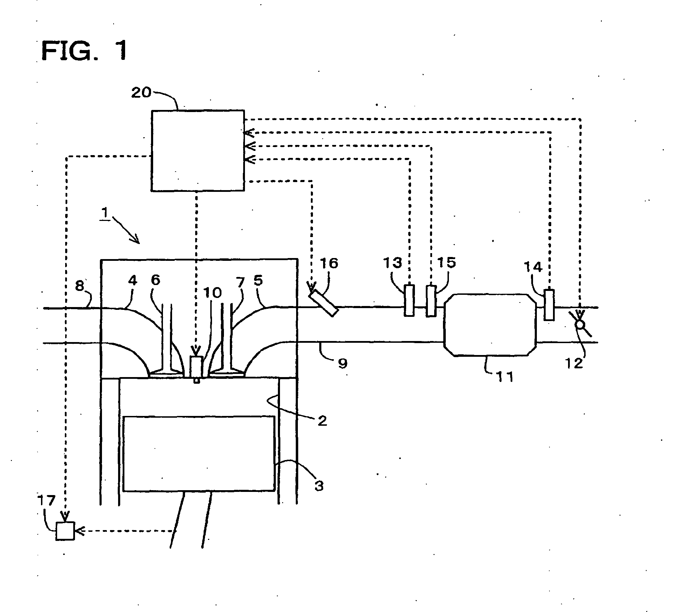

Fig. 1 is a diagram schematically showing the basic structure of the internal combustion engine according to this embodiment and its air-intake and exhaust systems. The internal combustion engine 1 is a diesel engine for driving a vehicle having four cylinders 2. In each of the cylinders 2 of the internal combustion engine 1, a piston 3 is provided in a slidable manner. An intake port 4 and an exhaust port 5 are connected to the combustion chamber formed in the upper portion of the cylinder 2. The openings of the intake port 4 and the exhaust port 5 that lead to the combustion chamber are closed and opened by an intake valve 6 and an exhaust valve 7 respectively. The intake port 4 and the exhaust port 5 are respectively connected with an intake passage 8 and an exhaust passage 9. A fuel injection valve 10 for directly injecting fuel into the interior of the cylinder 2 is provided on the cylinder 2.

In the exhaust passage 9, there is provided an NOx catalyst 11. A fuel addition valve 16 for adding fuel as a reducing agent to the exhaust gas is provided on the exhaust, passage 9 upstream of the NOx catalyst 11. An exhaust throttle valve 12 for controlling the exhaust gas flow rate is provided in the exhaust passage 9 downstream of the NOx catalyst 11.

In the exhaust passage 9, an upstream side exhaust gas temperature sensor 13 that outputs an electric signal indicative of the exhaust gas temperature and an exhaust gas air-fuel ratio sensor 15 that outputs an electric signal indicative of the air-fuel ratio of the exhaust gas are provided downstream of the fuel addition valve 16 and upstream of the NOx catalyst 11. A downstream side exhaust gas temperature sensor 14 that outputs an electric signal indicative of the exhaust gas temperature is provided in the exhaust passage 9 downstream of the NOx catalyst 11 and upstream of the exhaust gas throttle valve 12.

To the internal combustion engine 1 having the above-described structure, an ECU 20 for controlling the internal combustion engine 1 is annexed. The ECU 20 is electrically connected with various sensors such as the upstream side exhaust gas temperature sensor 13, the downstream side exhaust gas temperature sensor 14 and the exhaust gas air-fuel ratio sensor 15. Output signals of various sensors are input to the ECU 20. The ECU 20 is adapted to estimate the temperature of the NOx catalyst 11 based on the output value of the upstream side exhaust gas temperature sensor 13 and/or the downstream side exhaust gas temperature sensor 14. The ECU 20 is also electrically connected with the fuel injection valve 10, the fuel addition valve 16 and the exhaust gas throttle valve 12. These units are controlled by the ECU 20. The ECU 20 is also electrically connected with an alternator 17, which utilizes a driving force supplied by the internal combustion engine 1. The load placed by the alternator 17 is controlled by the ECU 20. In this embodiment the alternator 17 constitutes an auxiliary machine in the present invention.

### (NOx reduction control)

Next, NOx reduction control according to this embodiment will be described. In this embodiment, when the NOx kept in the NOx catalyst 11 is to be reduced (or deoxidized), NOx reduction control is effected. In the NOx reduction control, the temperature of the NOx catalyst 11 is raised to a specific temperature Tc or higher, and the air-fuel ratio of the ambient atmosphere of the NOx catalyst 11 is decreased to a specific air-fuel ratio Raf or lower.

Here, the predetermined temperature Tc and the specific air-fuel ratio Raf are threshold values of the temperature and the air fuel ratio that enable reduction of the NOx kept in the NOx catalyst 11. These values are determined in advance by, for example, experiments. The specific temperature Tc is higher than the lower limit of active temperatures Tr at which the NOx catalyst 11 is active.

In the NOx reduction control according to this embodiment, in cases where the temperature of the NOx catalyst 11 is lower than the specific temperature Tc, namely in cases where the temperature of the NOx catalyst 11 is to be raised, exhaust throttling is effected by bringing the exhaust throttle valve 12 to a closed state. This leads to an increase in the engine load of the internal combustion engine 1. In other words, the amount of the fuel injected by main fuel injection through the fuel injection valve 10 increases. Accordingly, the temperature of the exhaust gas discharged from the internal combustion engine 1 or the temperature of the exhaust gas flowing into the NOx catalyst 11 rises to make it possible to raise the temperature of the NOx catalyst 11 more rapidly.

In cases where the temperature of the NOx catalyst 11 is lower than the specific temperature Tc and higher than the active temperature Tr, the exhaust throttle valve 12 is brought to a closed state, , and fuel is added by the fuel addition valve 16 to the exhaust gas to supply the NOx catalyst 11 with fuel. Hereinafter, the fuel addition to the exhaust gas through the fuel addition valve 16 will be referred to as exhaust fuel addition.

When fuel is supplied to the NOx catalyst 11, the fuel is oxidized by the NOx catalyst 11, so that the temperature of the NOx 11 is raised by oxidation heat generated thereby. In this embodiment, reduction agent is supplied to the NOx catalyst 11 in a condition in which the pressure in the exhaust passage 9 on the upstream side of the exhaust throttle valve 12 has been increased by bringing the exhaust throttle valve 12 to a closed state. Therefore, oxidation of fuel by the NOx catalyst 11 can be facilitated more. Thus, temperature rise of the NOx catalyst 11 is promoted.

As per the above, when the temperature of the NOx catalyst 11 is to be raised to the specific temperature Tc or higher, it is possible to raise the temperature of the NOx catalyst 11 more rapidly.

In the NOx reduction control according to this embodiment, when the temperature of the NOx catalyst 11 becomes the specific temperature Tc or higher, the exhaust throttle valve 12 is brought to an open state, and exhaust fuel addition is effected through the fuel addition valve 16 in order to decrease the air-fuel ratio of the exhaust gas flowing into the NOx catalyst 11 to the specific air-fuel ratio Raf or lower. By decreasing the air-fuel ratio of the exhaust gas flowing into the NOx catalyst 11 to the specific air-fuel ratio Raf or lower, it is possible to decrease the air-fuel ratio of the ambient atmosphere of the NOx catalyst 11 to the specific air-fuel ratio Raf or lower.

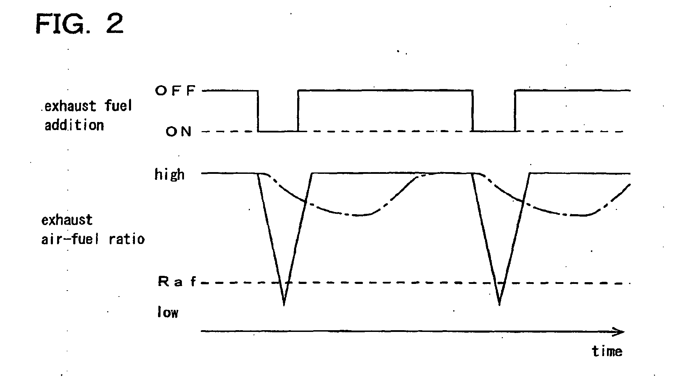

A description will be made of changes in the exhaust gas air-fuel ratio that are caused when exhaust fuel addition through the fuel addition valve 16 is effected in order to decrease the air fuel ratio of the exhaust gas flowing into the NOx catalyst 11 to the specific air-fuel ratio or lower, with reference to a time chart shown Fig. 2. In the exhaust fuel addition chart shown in Fig. 2, "ON" indicates the period during which the exhaust fuel addition is being effected, and "OFF" indicates the period during which the exhaust fuel addition is not being effected. In the exhaust air-fuel ratio chart shown in Fig. 2, the solid line represents the case where fuel is added through the fuel addition valve 16 while the exhaust throttle valve 12 is in an open state, and the chain line represents the case where fuel is added through the fuel addition valve 16 while the exhaust throttle valve is in a closed state. In the exhaust air-fuel ratio chart shown in Fig. 2, the broken line represents the specific air-fuel ratio Raf.

When exhaust fuel addition is effected through the fuel addition valve 16 with a view to decrease the air-fuel ratio of the exhaust gas flowing into the NOx catalyst 11 to the specific air-fuel ratio Raf or lower, fuel is added intermittently through the fuel addition valve 16 as shown in Fig. 2 in order to prevent excessive temperature rise of the NOx catalyst 11. Such an exhaust fuel addition that is effected intermittently will be referred to as intermittent exhaust fuel addition hereinafter.

When exhaust fuel addition is effected while the exhaust throttle valve 12 is in a closed state, the fuel added through the fuel addition valve 16 is likely to diffuse before it reaches the NOx catalyst 11, since the speed of flow of the exhaust gas flowing in the exhaust passage 9 upstream of the exhaust throttle valve 12 has decreased. Consequently, it is difficult to reduce the exhaust gas air-fuel ratio to the specific air-fuel ratio Raf or lower.

On the other hand, when exhaust fuel, addition is effected while the exhaust throttle valve 12 is in an opened state, the fuel added through the fuel addition valve 16 is hard to diffuse, since the speed of flow of the exhaust gas flowing in the exhaust passage 9 upstream of the exhaust throttle valve 12 is higher than that in the case where exhaust fuel addition is effected while the exhaust throttle valve 12 is in a closed state. Consequently, the exhaust gas air-fuel ratio is apt to be decreased to the specific air-fuel ratio Raf or lower as shown in Fig. 2.

In view of this, in the NOx reduction control according to this embodiment, when the air-fuel ratio of the ambient atmosphere of the NOx catalyst 11 is to be reduced to the specific air-fuel ratio Raf or lower, intermittent exhaust fuel addition through the fuel addition valve 16 is effected with the exhaust throttle valve 12 being kept in an opened state.

By this operation, it is possible to decrease the air-fuel ratio of the ambient atmosphere of the NOx catalyst 11 more rapidly in reducing the air-fuel ratio of the ambient atmosphere of the NOx catalyst 11 to the specific air-fuel ratio Raf or lower.

### (Control Routine of NOx Reduction Control)

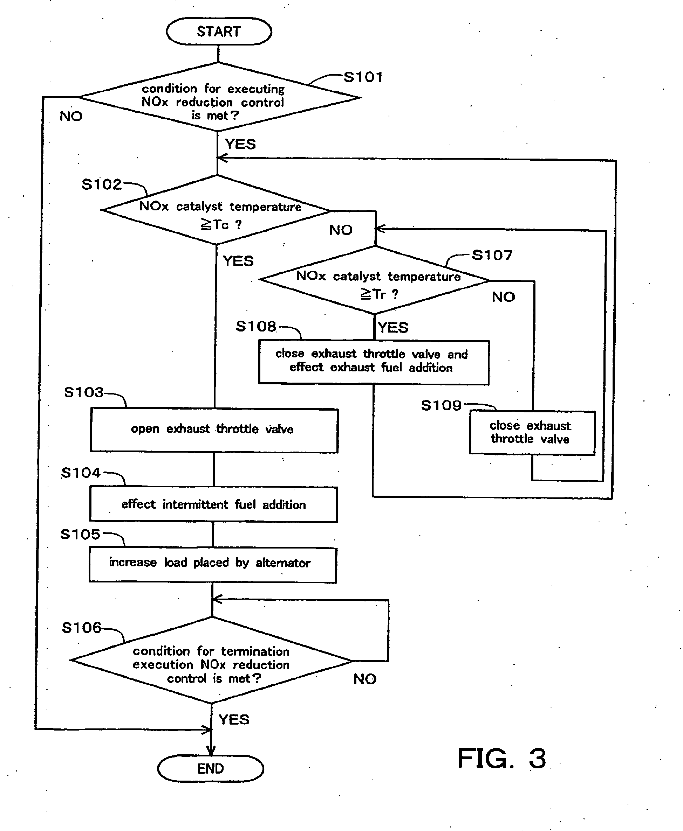

In the following, a control routine of the NOx reduction control according to this embodiment will be described with reference to a flow chart shown in Fig. 3. This routine is stored in the ECU 20 in advance and executed every time the crankshaft rotates by a specific crank angle while the internal combustion engine 1 is running.

In this routine, firstly in step 101, a determination is made by the ECU 20 as to whether or not a condition for executing the NOx reduction control is met. The condition for executing the NOx reduction control may be, for example, that the amount of the NOx kept-in the NOx catalyst 11 can be estimated to be larger than or equal to a first specific NOx amount. Alternatively, the condition for executing the NOx reduction control may be that the integrated amount of the fuel injection through the fuel injection valve 10 after completion of the latest execution of the NOx reduction control exceeds a specific amount, or that the travel distance of the vehicle after completion of the latest execution of the NOx reduction control exceeds a specific distance. If step S101 is answered in the affirmative, the process of the ECU 20 proceeds to step S102, and if step S101 is answered in the negative, the ECU 20 terminates execution of this routine.

In step S102, a determination is made by the ECU 20 as to whether or not the temperature of the NOx catalyst 11 is higher than or equal to the specific temperature Tc. If step S102 is answered in the affirmative, the process of the ECU 20 proceeds to step S103, and if step S102 is answered in the negative, the process of the ECU 20 proceeds to step S107.

In step S107, a determination is made by the ECU 20 as to whether or not the temperature of the NOx catalyst 11 is higher than or equal to the active temperature Tr. If step S107 is answered in the affirmative, the process of the ECU 20 proceeds to step S108, and if step S107 is answered in the negative, the process of the ECU 20 proceeds to step S109.

In step S108, the ECU 20 controls to bring the exhaust throttle valve 12 to a closed state and execute exhaust fuel addition through the fuel addition valve 16. In this process, it is preferred that the degree of opening of the exhaust throttle valve 12 be made as small as possible. The amount of fuel added through the fuel addition valve 16 is determined based on the difference between the current temperature of the NOx catalyst 11 and the specific temperature Tc. After bringing the exhaust throttle valve 12 to a closed state and executing the exhaust fuel addition through the fuel addition valve 16 in step S108, the process of the ECU 20 returns to step S102.

On the other hand, in step S109, the ECU 20 controls to bring the exhaust throttle valve 12 to a closed state, and thereafter the process returns to step S107. In step S109 also, it is preferred that the degree of opening of the exhaust throttle valve 12 be made as small as possible as is the case with the above step. After bringing the exhaust throttle valve 12 to a closed state in step S109, the process of the ECU 20 returns to step S107.

In step S103, the ECU 20 controls to bring the exhaust throttle valve 12 to an open state. In this process, it is preferred that the degree of opening of the exhaust throttle valve 12 be made as large as possible.

Next, the process of the ECU 20 proceeds to step S104 to effect intermittent exhaust fuel addition through the fuel addition valve 16. In this process, the amount of fuel added through the fuel addition valve 16 is determined based on the difference between the current air-fuel ratio of the exhaust gas flowing into the NOx catalyst 11 and the specific air-fuel ratio Raf.

Next, the process of the ECU 20 proceeds to step S105, where it controls to increase the electric power generation of the alternator 17 to increase the load placed by the alternator 17.

In the case where the exhaust throttle valve 12 has been brought to an opened state in step S103, the engine load of the internal combustion engine becomes lower than that in the, case where the exhaust throttle valve 12 is in a closed state, and the temperature of the exhaust gas discharged from the internal combustion engine 1 may become lower accordingly. This may lead to a decrease in the temperature of the NOx catalyst 11.

In view of this, a decrease in the engine load of the internal-combustion engine 1 is suppressed by increasing the load placed by the alternator 17 in step S105. Thus, it is possible to suppress a decrease in the temperature of the exhaust gas discharged from the internal combustion engine 1, to thereby suppress a decrease in the temperature of the NOx catalyst 11. The amount of increase in the load to be placed by the alternator 17 is determined by the amount of decrease in the engine load of the internal combustion engine 1 caused by bringing the exhaust gas throttle valve 12 to an open state in step S103.

In cases where the amount of decrease in the engine load of the internal combustion engine 1 caused by bringing the exhaust throttle valve 12 to an open state is larger than a certain amount, fuel addition through the fuel addition valve 16 may be further effected during a period that is originally intended to be an intermission of fuel addition in the intermittent exhaust fuel addition effected by the fuel addition valve 16 in order to reduce the air-fuel ratio of the ambient atmosphere of the NOx catalyst 11, in addition to increasing the load placed by the alternator 17.

By this process, the amount of fuel supplied to the NOx catalyst 11 increases, which leads to an increase in the quantity of heat generated by oxidation of fuel by the NOx catalyst 11. Thus, it is possible to suppress a decrease in the temperature of the NOx catalyst 11 even if there is a large decrease in the engine load of the internal combustion engine 1.

Next, the ECU 20 proceeds to step S106, where a determination is made as to whether or not the condition for terminating execution of the NOx reduction control is met. The condition for terminating the NOx reduction control may be, for example, that the amount of the NOx kept in the NOx catalyst 11 can be estimated to be smaller than or equal to a second specific NOx amount that is smaller than the first specific NOx amount. Alternatively, the condition for terminating the NOx reduction control may be that the time elapsed after starting execution of the intermittent exhaust fuel addition through the fuel addition valve 16 becomes equal to or longer than a specific time. If step S106 is answered in the affirmative, the ECU 20 terminates execution of this routine, and if step S106 is answered in the negative, the process of the ECU 20 returns to step S106.

According to the above-described control routine, when the temperature of the NOx catalyst 11 is to be raised, the exhaust throttle valve 12 is brought to a closed state. In addition, when the air-fuel ratio of the ambient atmosphere of the NOx catalyst 11 is to be reduced, the exhaust throttle valve 12 is brought to an open state and exhaust fuel addition through the fuel addition valve 16 is effected.

As per the above, according to this embodiment, when the NOx kept in the NOx catalyst 11 is reduced, it is possible to raise the temperature of the NOx catalyst 11 more rapidly and to reduce the air-fuel ratio of the ambient atmosphere of the NOx catalyst 11 more quickly. Thus, it is possible to reduce the NOx kept in the NOx catalyst 11 more efficiently.

When the SOx kept in the NOx catalyst 11 is to be reduced (or deoxidized) also, the fuel addition valve 16 and the exhaust throttle valve 12 may be controlled in a manner similar to the NOx reduction control according to this embodiment. More specifically, also in the case where the SOx kept in the NOx catalyst is to be reduced, the exhaust throttle valve 12 may be brought to a closed state when the temperature of the NOx catalyst 11 is raised, and exhaust fuel addition through the fuel addition valve 16 may be effected while bringing the exhaust throttle valve 12 to an open state when the air-fuel ratio of the ambient atmosphere of the NOx catalyst 11 is reduced. Thus, it is possible to reduce the SOx kept in the NOx catalyst 11 efficiently.

Alternatively, the exhaust fuel addition through the fuel addition valve 16 may be replaced by post fuel injection in which fuel is injected through the fuel injection valve 10 in a period posterior to the main fuel injection and in a non-ignition period in the combustion cycle. Here, the non-ignition period refers to the period in which when fuel is injected into the cylinder 2, the most part of the injected fuel does not ignite. ,

In this embodiment, when the temperature of the NOx catalyst 11 is to be raised, the exhaust fuel addition through the fuel addition valve 16 is effected in cases where the temperature of the NOx catalyst 11 is higher than or equal to the active temperature Tr. However, even in the case where the temperature of the NOx catalyst 11 is lower than the active temperature Tr, the exhaust fuel addition through the fuel addition valve 16 may be effected if the engine load of the internal combustion engine 1 is low to some extent.

When the engine load of the internal combustion engine is low, fuel added through the fuel addition valve 16 tends to adhere to the NOx catalyst 11, since the speed of flow of the exhaust gas in the exhaust passage 9 is low. The fuel adhering on the NOx catalyst 11 will be oxidized when the temperature of the NOx catalyst 11 exceeds the active temperature Tr, whereby temperature rise of the NOx catalyst 11 will be promoted.

### (Second Embodiment)

### (Basic Structure of Internal Combustion Engine and its Air-Intake and Exhaust Systems)

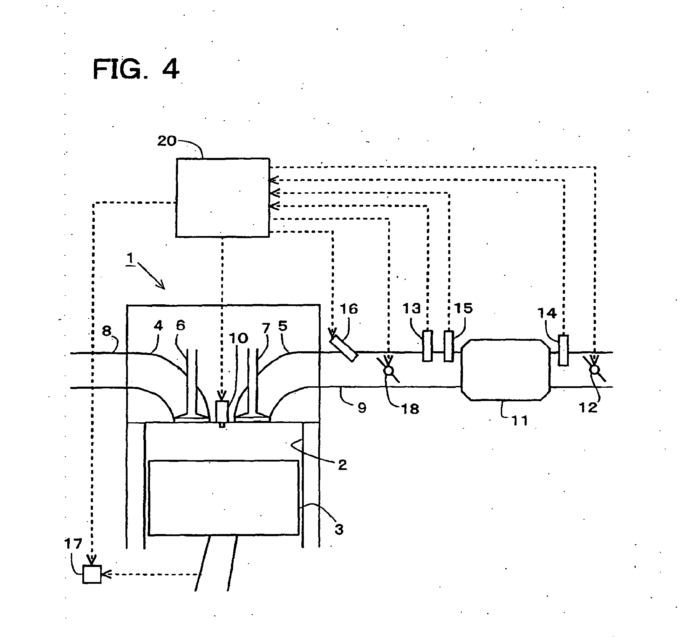

Fig. 4 is a diagram schematically showing the basic structure of the internal combustion engine according to this embodiment and its air-intake and exhaust systems. The basic structure of the internal combustion engine and its air-intake and exhaust systems according to this embodiment differs from that of the above-described first embodiment only in that an exhaust throttle valve 18 is provided in the exhaust passage 9 downstream of the fuel addition valve 16 and upstream of the upstream side exhaust gas temperature sensor 13 and the exhaust gas air-fuel ratio sensor 15. The structures of the other portions are the same as those in the first embodiment, and the same elements will be designated by the same reference numerals and descriptions thereof will be omitted.

In this second embodiment, exhaust throttle valve 12 will be referred to as the first exhaust throttle valve 12, and exhaust throttle valve 18 will be referred to as the second exhaust throttle valve 18.

### (Control Routine of NOx Reduction Control)

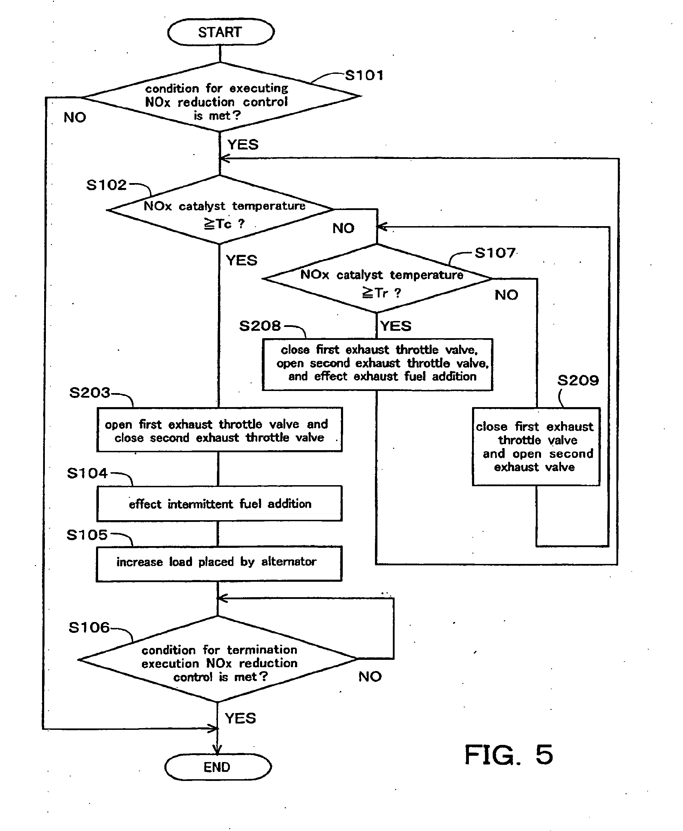

In the following, a control routine of the NOx reduction control according to the this embodiment will be described with reference to a flow chart shown in Fig. 5. In this routine, steps S103, S108 and S109 in the control routine of the NOx reduction control according to the above-described first embodiment have been replaced by steps S201, S208 and S209 respectively. The steps other than those mentioned above are the same as the corresponding steps in the first embodiment. The following description will be made only of steps S201, S208 and S209 accordingly. This routine is stored in the ECU 20 in advance and executed every time the crankshaft rotates by a specific crank angle while the internal combustion engine 1 is running.

In this routine, if the question of step S107 is answered in the affirmative, the process of the ECU 20 advances to step S208. In step S208, the ECU 20 controls to bring the first exhaust throttle valve 12 to a closed state, and to bring the second exhaust throttle valve 18 to an open state. In addition, exhaust fuel addition through the fuel addition valve 16 is effected. In this process, it is preferred that the degree of opening of the first exhaust throttle valve 12 be made as small as possible, as is the case in the first embodiment. The amount of the fuel added through the fuel addition valve 16 is determined based on the difference between the current temperature of the NOx catalyst 11 and the specific temperature Tc, in the same manner as in the first embodiment. After bringing the first exhaust throttle valve 12 to a closed state and the second exhaust throttle valve 18 to an open state and effecting the exhaust fuel addition through the fuel addition valve 16 in step S208, the process of the ECU 20 returns to step S102.

On the other hand, if the question in step S107 in this routine is answered in the negative, the process of the ECU 20 proceeds to step S209. In step S209, the ECU 20 controls to bring the first exhaust throttle valve 12 to a closed state, and to bring the second exhaust throttle valve. 18 to an open state. In step S209 also, it is preferred that the degree of opening of the first exhaust throttle valve 12 be made as small as possible as with the above-described step. After bringing the first exhaust throttle valve 12 to a closed state and the second exhaust throttle valve 18 to an open state in step S209, the process of the ECU 20 returns to step S107.

In this embodiment, if the question in step S102 is answered in the affirmative, the process of the ECU 20 proceeds to step S203. In step S203, the ECU 20 controls to bring the first exhaust throttle valve 12 to an open state, and to bring the second exhaust throttle valve 18 to a closed state. In this process, it is preferred that the degree of opening of the first exhaust throttle valve 12 be made as large as possible as is the case in the above-described first embodiment. After bringing the first exhaust throttle valve 12 to an open state and the second exhaust throttle valve 18 to a closed state in step S203, the process of the ECU 20 proceeds to step S104.

According to the constitution of this embodiment, when the first exhaust throttle valve 12 is in a closed state and the second exhaust throttle valve 18 is in an open state, it is possible to raise the temperature of the exhaust gas flowing into the NOx catalyst 11 and to increase the pressure in the exhaust passage 9 on the upstream side of the first exhaust throttle valve 12 in a similar manner as in the case where there is only the first exhaust throttle valve 12 and the valve 12 is in a closed state like in the first embodiment.

Therefore, when the temperature of the NOx catalyst 11 is to be raised to the specific temperature Tc or higher, it is possible to raise the temperature of the NOx catalyst 11 more rapidly by bringing the first exhaust throttle valve 12 in a closed state and the second exhaust throttle valve 18 in an open state as in the process of steps S208 and S209 in the above-described control routine of NOx reduction control.

On the other hand, in the constitution of this embodiment, when the first exhaust throttle valve 12 is in an open state and the second exhaust throttle valve 18 is in a closed state, the flow rate of the exhaust gas is decreased at the position of the second exhaust throttle valve 18. Consequently, a pressure difference between the upstream side and the downstream side of the second exhaust throttle valve 18 is created. Therefore, the speed of flow of the exhaust gas on the downstream side of the second exhaust throttle valve 18 becomes higher than that in the case where both the first exhaust throttle valve 12 and the second exhaust throttle valve 18 are in open states.

Therefore, when exhaust fuel addition is effected in the state where the first exhaust throttle valve 12 is in an open state and the second exhaust throttle valve 18 is in a closed state, fuel becomes hard to diffuse on the downstream side of the second exhaust throttle valve 18. As a result, fuel can be supplied to the NOx catalyst 11 in a more concentrated manner.

Therefore, when the air-fuel ratio of the ambient atmosphere of the NOx catalyst 11 is to be reduced to the specific air-fuel ratio Raf or lower, it is possible to reduce the air-fuel ratio of the ambient atmosphere of the NOx catalyst 11 more rapidly by bringing the first exhaust throttle valve 12 in an open state and the second exhaust throttle valve 18 in a closed state as in the process of step S203 in the above-described control routine of NOx reduction control.

As has been described in the foregoing, according to this embodiment, in reducing the NOx kept in the NOx catalyst 11, it is possible to raise the temperature of the NOx catalyst 11 more rapidly and to decrease the air-fuel ratio of the ambient atmosphere of the NOx catalyst 11 more quickly. Therefore, it is possible to reduce (or deoxidize) the NOx kept in the NOx catalyst 11 more efficiently.

When the SOx kept in the NOx catalyst 11 is to be reduced also, the fuel addition valve 16, the first exhaust throttle valve 12 and the second exhaust throttle valve 18 may be controlled in a manner similar to the NOx reduction control according to this embodiment. By such control, it is possible to reduce the SOx kept in the NOx catalyst 11 efficiently.

Post fuel injection may be effected instead of the exhaust fuel addition through the fuel addition valve 16 as is the case with the first embodiment.

When the temperature of the NOx catalyst 11 is to be raised, even in the case where the temperature of the NOx catalyst 11 is lower than the active temperature Tr, exhaust fuel addition through the fuel addition valve 16 may be effected if the engine load of the internal combustion engine 1 is low to some extent, as is the case with the first embodiment.

According to the present invention, in reducing (or deoxidizing) oxide kept by an NOx catalyst in an exhaust gas purifying system of an internal combustion engine having the NOx catalyst provided in the exhaust passage of the internal combustion engine, it is possible to raise the temperature of the NOx catalyst more rapidly and to decrease the air-fuel ratio of the ambient atmosphere of the NOx catalyst more quickly. Therefore, it is possible to reduce the oxide kept by the NOx catalyst more efficiently.

While the invention has been described in terms of preferred embodiments, those skilled in the art will recognize that the invention can be practiced with modifications within the spirit and scope of the appended claim.

## Claims

1. An exhaust gas purifying system of an internal combustion engine comprising:
an NOx storage reduction catalyst (11) provided in an exhaust passage (9) of the internal combustion engine (1);
reducing agent supply means (16) provided upstream of the NOx storage reduction catalyst (11) for supplying a reducing agent to the NOx storage reduction catalyst (11);
catalyst temperature detection means (13, 14) for detecting the temperature of said NOx storage reduction catalyst (11);
an exhaust throttle valve (12) provided in said exhaust passage (9) downstream of said NOx storage reduction catalyst (11); and
oxide reduction means (20) for reducing oxide kept in said NOx storage reduction catalyst (11) by raising the temperature of said NOx storage reduction catalyst (11) to a specific temperature or higher and decreasing the air-fuel ratio of ambient atmosphere of said NOx storage reduction catalyst (11) to a specific air-fuel ratio or lower, when a specific condition is met,
wherein in reducing the oxide kept in said NOx storage reduction catalyst (11), when the temperature of said NOx storage reduction catalyst (11) detected by said catalyst temperature detection means (13, 14) is lower than said specific temperature, said oxide reduction means (20) brings said exhaust throttle valve (12) to a closed state, and when the temperature of said NOx storage reduction catalyst (11) detected by said catalyst temperature detection means (13, 14) is equal to or higher than said specific temperature, said oxide reduction means (20) brings said exhaust throttle valve (12) to an open state and supplies reducing agent from said reducing agent supply means (16) to decrease the air-fuel ratio of the ambient atmosphere of said NOx storage reduction catalyst (11) to said specific air-fuel ratio of lower.

2. An exhaust gas purifying system of an internal combustion engine according to claim 1, further comprising load placed by auxiliary machine control means (20) for controlling a load placed on said internal combustion engine by an auxiliary machine (17) that is driven by said internal combustion engine (1), wherein when the oxide kept by said NOx storage reduction catalyst (11) is reduced by said oxide reduction means (20), if said exhaust throttle valve (12) has been brought to an open state, said load placed by auxiliary machine control means (20) increases the load placed by said auxiliary machine (17) to make it higher than that in the case where said exhaust throttle valve (12) has been brought to a closed state.

3. An exhaust gas purifying system of an internal combustion engine according to claim 1 or 2, further comprising a second exhaust throttle valve (18) in addition to said exhaust throttle valve (12) as a first exhaust throttle valve, the second exhaust throttle valve (18) being provided in said exhaust passage (9), downstream of said reducing agent supply means (16) and upstream of said NOx storage reduction catalyst (11), wherein in reducing the oxide kept in said NOx storage reduction catalyst (11), when the temperature of said NOx storage reduction catalyst (11) detected by said catalyst temperature detection means (13, 14) is lower than said specific temperature, said oxide reduction means (20) brings said first exhaust throttle valve (12) to a closed state and brings said second exhaust throttle valve (18) to an open state, and when the temperature of said NOx storage reduction catalyst (11) detected by said catalyst temperature detection means (13, 14) is equal to or higher than said specific temperature, said oxide reduction means (20) brings said first exhaust throttle valve (12) to an open state and brings said second exhaust throttle valve (18) to a closed state.

## Patentansprüche

1. Abgasreinigungssystem einer Brennkraftmaschine mit: einem NOx speichernden und reduzierenden Katalysator (11), welcher in einem Abgaskanal (9) der Brennkraftmaschine (1) vorgesehen ist;
einer Reduktionsmittelversorgungseinrichtung (16), welche stromaufwärts von dem NOx speichernden und reduzierenden Katalysator (11) für das Bereitstellen eines Reduktionsmittels für den NOx speichernden und reduzierenden Katalysator (11) vorgesehen ist;
einer Katalysatortemperaturerfassungseinrichtung (13, 14) für das Erfassen der Temperatur des NOx speichernden und reduzierenden Katalysators (11);
einem Abgasdrosselventil (12), welches in dem Abgaskanal (9) stromabwärts von dem NOx speichernden und reduzierenden Katalysator (11) vorgesehen ist; und
einer Oxidreduktionseinrichtung (20) für das Reduzieren von Oxid, welches in dem NOx speichernden und reduzierenden Katalysator (11) gehalten wird, durch ein Erhöhen der Temperatur des NOx speichernden und reduzierenden Katalysators (11) auf eine spezifische Temperatur oder höher und ein Senken des Luft-Kraftstoff-Verhältnisses der Umgebungsatmosphäre des NOx speichernden und reduzierenden Katalysators (11) auf ein spezifisches Luft-Kraftstoff-Verhältnis oder niedriger, wenn eine spezifische Voraussetzung erfüllt ist,
wobei beim Reduzieren des Oxids, welches in dem NOx speichernden und reduzierenden Katalysator (11) gehalten wird, wenn die durch die Katalysatortemperaturerfassungseinrichtung (13, 14) erfasste Temperatur des NOx speichernden und reduzierenden Katalysators (11) niedriger als die spezifische Temperatur ist, die Oxidreduktionseinrichtung (20) das Abgasdrosselventil (12) in einen geschlossenen Zustand bringt, und wenn die durch die Katalysatortemperaturerfassungseinrichtung (13, 14) erfasste Temperatur des NOx speichernden und reduzierenden Katalysators (11) gleich wie oder höher als die spezifische Temperatur ist, die Oxidreduktionseinrichtung (20) das Abgasdrosselventil (12) in einen offenen Zustand bringt und Reduktionsmittel von der Reduktionsmittelversorgungseinrichtung (16) so zuführt, dass das Luft-Kraftstoff-Verhältnis der Umgebungsatmosphäre des NOx speichernden und reduzierenden Katalysators (11) auf das spezifische Luft-Kraftstoff-Verhältnis oder niedriger gesenkt wird.

2. Abgasreinigungssystem einer Brennkraftmaschine nach Anspruch 1, welches ferner eine Last aufweist, die durch eine Hilfsmaschinensteuereinrichtung (20) für das Steuern einer durch eine Hilfsmaschine (17), die durch die Brennkraftmaschine (1) angetrieben wird, aufgebrachte Last aufgebracht wird, wobei, wenn das in dem NOx speichernden und reduzierenden Katalysator (11) gehaltene Oxid durch die Oxidreduktionseinrichtung (20) reduziert wird, wenn das Abgasdrosselventil (12) in einen offenen Zustand gebracht wurde, die durch die Hilfsmaschinensteuereinrichtung (20) aufgebrachte Last, die durch die Hilfsmaschine (17) aufgebrachte Last so erhöht, dass sie höher als in dem Fall gemacht wird, in dem das Abgasdrosselventil (12) in einen geschlossenen Zustand gebracht wurde.

3. Abgasreinigungssystem einer Brennkraftmaschine nach Anspruch 1 oder 2, welches ferner ein zweites Abgasdrosselventil (18), zusätzlich zu dem Abgasdrosselventil (12) als einem ersten Abgasdrosselventil aufweist, wobei das zweite Abgasdrosselventil (18) in dem Abgaskanal (9) stromabwärts von der Reduktionsmittelversorgungseinrichtung (16) und
stromaufwärts von dem NOx speichernden und reduzierenden Katalysator (11) vorgesehen ist, wobei beim Reduzieren des in dem NOx speichernden und reduzierenden Katalysator (11) gehaltenen Oxids, wenn die durch die Katalysatortemperaturerfassungseinrichtung (13, 14) erfasste Temperatur des NOx speichernden und reduzierenden Katalysators (11) niedriger als die spezifische Temperatur ist, die Oxidreduktionseinrichtung (20) das erste Abgasdrosselventil (12) in einen geschlossenen Zustand bringt und das zweite Abgasdrosselventil (18) in einen offenen Zustand bringt, und wenn die durch die Katalysatortemperaturerfassungseinrichtung (13, 14) erfasste Temperatur des NOx speichernden und reduzierenden Katalysators (11) gleich wie oder höher als die spezifische Temperatur ist, die Oxidreduktionseinrichtung (20) das erste Abgasdrosselventil (12) in einen offenen Zustand bringt und das zweite Abgasdrosselventil (18) in einen geschlossenen Zustand bringt.

## Revendications

1. Système de purification des gaz d'échappement d'un moteur à combustion interne comprenant :
un catalyseur de stockage et de réduction de NOx (11) prévu dans un passage d'échappement (9) du moteur à combustion interne (1) ;
un moyen d'alimentation en agent de réduction (16) prévu en amont du catalyseur de stockage et de réduction de NOx (11) destiné à délivrer un agent de réduction vers le catalyseur de stockage et de réduction de NOx (11) ;
un moyen de détection de température de catalyseur (13, 14) destiné à détecter la température dudit catalyseur de stockage et de réduction de NOx (11) ;
un papillon des gaz d'échappement (12) prévu dans ledit passage d'échappement (9) en aval dudit catalyseur de stockage et de réduction de NOx (11) ; et
un moyen de réduction d'oxydes (20) destiné à réduire les oxydes maintenus dans le catalyseur de stockage et de réduction de NOx (11) en élevant la température dudit catalyseur de stockage et de réduction de NOx (11) à une température spécifique ou plus élevée et en diminuant le rapport air-carburant de l'atmosphère ambiante dudit catalyseur de stockage et de réduction de NOx (11) à un rapport air-carburant spécifique ou inférieur, lorsqu'une condition spécifique est satisfaite,
dans lequel, en réduisant les oxydes maintenus dans ledit catalyseur de stockage et de réduction de NOx (11), lorsque la température dudit catalyseur de stockage et de réduction de NOx (11) détectée par ledit moyen de détection de température de catalyseur (13, 14) est inférieure à ladite température spécifique, ledit moyen de réduction d'oxydes (20) amène ledit papillon des gaz d'échappement (12) dans un état fermé, et lorsque la température dudit catalyseur de stockage et de réduction de NOx (11) détectée par ledit moyen de détection de température de catalyseur (13, 14) est égale ou supérieure à ladite température spécifique, ledit moyen de réduction d'oxydes (20) amène ledit papillon des gaz d'échappement (12) dans un état ouvert et délivre l'agent de réduction depuis ledit moyen d'alimentation en agent de réduction (16) pour diminuer le rapport air-carburant de l'atmosphère ambiante dudit catalyseur de stockage et de réduction de NOx (11) audit rapport air-carburant spécifique ou moins.

2. Système de purification des gaz d'échappement d'un moteur à combustion interne selon la revendication 1, comprenant de plus une charge placée par un moyen de commande de machine auxiliaire (20) destiné à commander une charge placée sur ledit moteur à combustion interne par une machine auxiliaire (17) qui est entraînée par ledit moteur à combustion interne (1), dans lequel lorsque les oxydes maintenus par ledit catalyseur de stockage et de réduction de NOx (11) sont réduits par ledit moyen de réduction d'oxydes (20), si ledit papillon des gaz d'échappement (12) a été amené dans un état ouvert, ladite charge placée par le moyen de commande de machine auxiliaire (20) augmente la charge placée par ladite machine auxiliaire (17) pour la rendre plus importante que celle dans le cas dans lequel ledit papillon des gaz d'échappement (12) a été amené dans un état fermé.

3. Système de purification des gaz d'échappement d'un moteur à combustion interne selon la revendication 1 ou 2, comprenant de plus un deuxième papillon des gaz d'échappement (18) en plus dudit papillon des gaz d'échappement (12) en tant que premier papillon des gaz d'échappement, le deuxième papillon des gaz d'échappement (18) étant prévu dans ledit passage d'échappement (9), en aval dudit moyen d'alimentation en agent de réduction (16) et en amont dudit catalyseur de stockage et de réduction de NOx (11), dans lequel, en réduisant les oxydes maintenus dans ledit catalyseur de stockage et de réduction de NOx (11), lorsque la température dudit catalyseur de stockage et de réduction de NOx (11) détectée par ledit moyen de détection de température de catalyseur (13, 14) est inférieure à ladite température spécifique, ledit moyen de réduction d'oxydes (20) amène ledit premier papillon des gaz d'échappement (12) dans un état fermé et amène ledit deuxième papillon des gaz d'échappement (18) dans un état ouvert, et lorsque la température dudit catalyseur de stockage et de réduction de NOx (11) détectée par ledit moyen de détection de température de catalyseur (13, 14) est égale ou supérieure à ladite température spécifique, ledit moyen de réduction d'oxydes (20) amène ledit premier papillon des gaz d'échappement (12) dans un état ouvert et amène ledit deuxième papillon des gaz d'échappement (18) dans un état fermé.
